(19) Europäisches Patentamt
European Patent Office
Office européen des brevets

(11) EP 4 092 081 A1

(12) EUROPEAN PATENT APPLICATION

(43) Date of publication:
**23.11.2022 Bulletin 2022/47**

(21) Application number: **21174269.7**

(22) Date of filing: **18.05.2021**

(51) International Patent Classification (IPC):
***C08L 69/00*** *(2006.01)*

(52) Cooperative Patent Classification (CPC):
(C-Sets available)
**C08G 64/06; C08L 69/00;** C08L 2205/02;
C08L 2205/035 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude K12**
**51365 Leverkusen (DE)**

# (54) FLAME RETARDANT POLYCARBONATE COMPOSITION WITH HIGH COMPARATIVE TRACKING INDEX

(57) The present invention relates to a polycarbonate composition comprising the following components, relative to the total weight of the composition: A) 30 - 80 wt. % of a copolycarbonate, B) 10 - 40 wt. % of a homopolycarbonate, C) 8 - 25 wt. % of a phosphorous flame retardant, D) 0 - 8 wt. % of an impact modifier, and E) 0 - 8 wt. % of a styrene-acrylonitrile copolymer, wherein the weight-average molecular weight of the homopolycarbonate is in the range of 24000 - 28000g/mol, the total amount of impact modifier and the styrene-acrylonitrile copolymer is no more than 15 wt. %. The present invention also relates to a shaped article made from the composition. The polycarbonate composition according to the present invention has a high comparative tracking index, good flowability, and good flame retardancy.

EP 4 092 081 A1

(52) Cooperative Patent Classification (CPC): (Cont.)

C-Sets
**C08L 69/00, C08K 5/523, C08L 25/12, C08L 27/18, C08L 51/04, C08L 69/00;**
**C08L 69/00, C08K 5/523, C08L 25/12, C08L 27/18, C08L 55/02, C08L 69/00;**
**C08L 69/00, C08K 5/5399, C08L 25/12, C08L 27/18, C08L 51/04, C08L 69/00**

## Description

### TECHNICAL FIELD

The present invention relates to a polycarbonate (PC) composition. In particular, the present invention relates to a polycarbonate composition with high level of comparative tracking index and good flame retardancy, and a shaped article made from the same.

### BACKGROUND ART

Polycarbonate is widely used for a variety of applications, such as automotive, electric and electronic fields due to excellent optical, mechanical and heat resistant properties as well as excellent thermal processing ability thereof.

Copolycarbonates, as special types of polycarbonates, are widely used in electrical and electronic sectors, as housing material of lights, and in applications where particular thermal and mechanical properties are required, for example blow dryers, applications in the automotive sector, plastic covers, diffuser screens or waveguide elements and lamp covers or lamp bezels.

It is known that the heat distortion resistance of polycarbonate can be improved by introducing a specific building block based on 1,1-bis(4-hydroxyphenyl)-3,3,5-trimethylcyclohexane (Bisphenol TMC) into polycarbonate backbone. The copolycarbonate obtained thereby (so-called high-Tg polycarbonate) is expensive. Furthermore, the flowability of such kind of copolycarbonates is not high due to its relatively higher glass transition temperature (Tg).

Recently, there is a trend to miniaturize electronic and electrical devices in the field of electric and electronic applications. This prompted the adoption of more complicated and compacted design of electrical devices including plastic housings or parts. Therefore, safety-related properties of plastic materials, such as comparative tracking index (CTI) and flame retardancy, were required in the field of electronics and electrical applications.

For instance, a high level of flame retardancy (e.g., V0 rating at 1.5mm as determined according to UL94-2015) and high CTI rank (e.g., CTI= 600 V as determined according to IEC60112:2011) are required for plastic materials. However, it has been well known that the comparative tracking index for standard polycarbonate resin is only around 250 V or even below.

Furthermore, introducing flame retardant agents into standard bisphenol A based polycarbonate was commonly believed to be harmful to the CTI performance of finished blends, the more the flame retardant, the lower the CTI will be, more details can be found in S. Sullalti et al., "Effect of phosphorus based flame retardants on UL94 and Comparative Tracking Index properties of poly(butylene terephthalate)", Polymer Degradation and Stability, 2012.

US4900784A discloses a polymer mixture which consists of a polybutylene terephthalate, a brominated polystyrene, an aromatic polycarbonate and an agent to improve the impact strength, which shows a combination of good flame-retardancy and a high level of comparative tracking index.

Thus, it is still a challenge to obtain polycarbonate compositions having high CTI, good flowability, and good flame retardancy.

### SUMMARY OF THE INVENTION

One objective of the present application is thus to provide a polycarbonate composition which has a good combination of comparative tracking index and flame retardancy.

Another object of the present application is to provide an article which has a good combination of comparative tracking index and flame retardancy.

In a first aspect, the present invention provides a polycarbonate composition comprising the following components, relative to the total weight of the composition:

A) 30 - 80 wt. % of a copolycarbonate comprising

i) 24 - 70 mol% of an unit of formula (1)

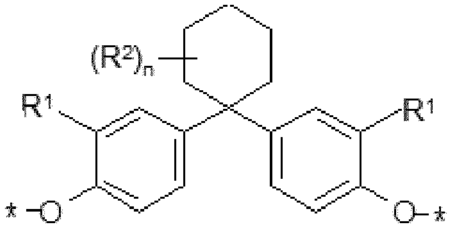

(1)

wherein

* indicates the position where formula (1) is connected to the polymer chain,
$R^1$, each independently, is hydrogen or $C_1$-$C_4$ alkyl,
$R^2$, each independently, is $C_1$-$C_4$ alkyl,
n is 0, 1, 2 or 3, and

ii) 30 - 76 mol% of an unit of formula (2):

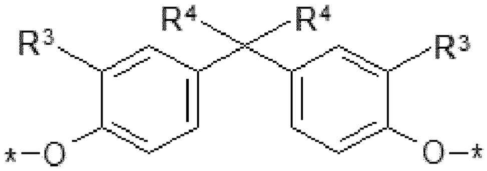

(2)

wherein

* indicates the position where formula (2) is connected to the polymer chain,$R^3$, each independently, is H, linear or branched $C_1$-$C_{10}$ alkyl, and
$R^4$, each independently, is linear or branched $C_1$-$C_{10}$ alkyl,
wherein the mol% is calculated based on the total mole number of units of formula (1) and formula (2),

B) 10 - 40 wt. % of a homopolycarbonate containing an unit of formula (2) as defined above, wherein the weight-average molecular weight of the homopolycarbonate is in the range of 24000 - 28000 g/mol,
C) 8 - 25 wt. % of a phosphorous flame retardant,
D) 0 - 10 wt. % of an impact modifier, and
E) 0 - 8 wt. % of a rubber-free vinyl copolymer,

wherein
the total amount of the impact modifier and the rubber-free vinyl copolymer is no more than 15 wt. %, and
the content by weight of the unit of formula (1) in the polycarbonate composition is no less than 24 wt. %.

As used herein, the content by weight of the unit of formula (1) in the polycarbonate composition ($C_{1/C/W}$) is calculated as follows:

$$C_{1/C/W} = \frac{C_{1/CO/M} \times M_{w1}}{(C_{1/CO/M} \times M_{w1} + C_{2/CO/M} \times M_{w2})} \times C_{co/c/w}$$

Wherein

$C_{1/C/W}$ stands for the content by weight of the unit of formula (1) in the polycarbonate composition;

$C_{1/CO/M}$ stands for the content by mole of the unit of formula (1) in the copolycarbonate;
$M_{w1}$ stands for the molecular weight of the unit of formula (1), which is expressed in grams per mole;
$C_{2/CO/M}$ stands for the content by mole of the unit of formula (2) in the copolycarbonate;
$M_{w2}$ stands for the molecular weight of the unit of formula (2), which is expressed in grams per mole; and
$C_{co/c/w}$ stands for the content by weight of the copolycarbonate in the polycarbonate composition.

The inventors have discovered unexpectedly that the composition according to the present invention has a comparative tracking index up to 600V as determined according to IEC60112:2011, and a flame-retardancy level of V0 as determined according to UL94-2015.

Comparative tracking index (CTI) means a numerical value of the maximum voltage at which five test specimens in test period withstand 50 drops of specified electrolyte liquid without tracking failure and without a persistent flame occurring, as determined according to IEC60112:2011.

In a second aspect, the present invention provides a shaped article made from a polycarbonate composition according to the first aspect of the present invention.

In a third aspect, the present invention provides a process for preparing the shaped article mentioned above, comprising injection moulding, extrusion moulding, blow moulding or thermoforming the polycarbonate composition according to the first aspect of the present invention.

Other subjects and characteristics, aspects and advantages of the present invention will emerge even more clearly on reading the description and the examples that follow.

## DETAILED DESCRIPTION OF THE INVENTION

In that which follows and unless otherwise indicated, the limits of a range of values are included within this range, in particular in the expressions "between...and..." and "from ... to ...".

Unless defined otherwise, all technical and scientific terms used herein have the same meaning as commonly understood by one of ordinary skill in the art to which the present invention pertains. When the definition of a term in the present description conflicts with the meaning as commonly understood by those skilled in the art the present invention belongs to, the definition described herein shall apply.

Throughout the instant application, the term "comprising" is to be interpreted as encompassing all specifically mentioned features as well optional, additional, unspecified ones. As used herein, the use of the term "comprising" also discloses the embodiment wherein no features other than the specifically mentioned features are present (i.e. "consisting of").

Unless otherwise specified, all numerical values expressing amount of ingredients and the like which are used in the description and claims are to be understood as being modified by the term "about".

### Component A

According to the first aspect, the polycarbonate composition according to the present invention comprises a copolycarbonate.

In the present application, the copolycarbonate refers to the polycarbonate comprising

i) 24 - 70 mol% of an unit of formula (1)

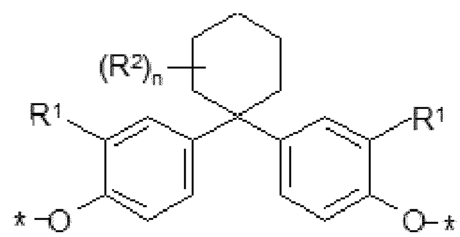

(1)

wherein

* indicates the position where formula (1) is connected to the polymer chain,

$R^1$, each independently, is hydrogen or $C_1$-$C_4$ alkyl,
$R^2$, each independently, is $C_1$-$C_4$ alkyl,
n is 0, 1, 2 or 3, and

ii) 30 - 76 mol% of an unit of formula (2):

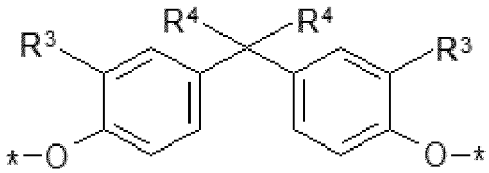

(2)

wherein

* indicates the position where formula (2) is connected to the polymer chain,
$R^3$, each independently, is H, linear or branched $C_1$-$C_{10}$ alkyl, preferably, H, linear or branched $C_1$-$C_4$ alkyl, and
$R^4$, each independently, is linear or branched $C_1$-$C_{10}$ alkyl, preferably linear or branched $C_1$-$C_4$ alkyl,
wherein the mol% is calculated based on the total mole number of units of formula (1) and formula (2).

The units of formula (1) can be derived from a diphenol of formula (1'):

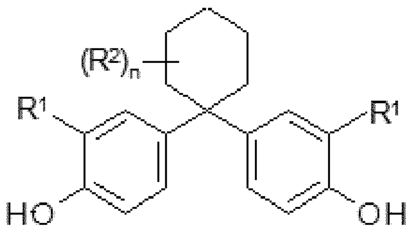
(1')

wherein

$R^1$, each independently, represents hydrogen or $C_1$-$C_4$-alkyl,
$R^2$, each independently, represents $C_1$-$C_4$-alkyl,
n represents 0, 1, 2 or 3.

Preferably, the unit of formula (1) has the following formula (1a),

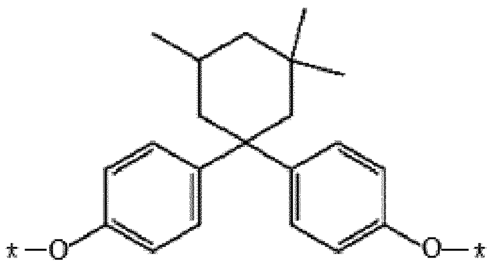

(1a)

wherein * indicates the position where formula (1a) is connected to the polymer chain, i.e., the unit of formula (1) is derived from bis(4-hydroxyphenyl)-3,3,5-trimethylcyclohexane (BPTMC) having the formula (1'a):

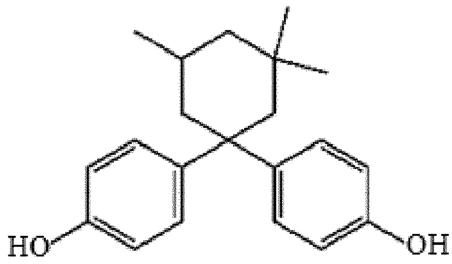

(1'a).

The units of formula (2) can be derived from a diphenol of formula (2'):

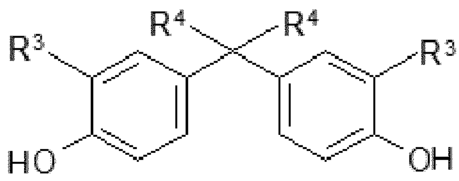

(2')

wherein

$R^3$, each independently, represents H, linear or branched $C_1$-$C_{10}$ alkyl,
$R^4$, each independently, represents linear or branched $C_1$-$C_{10}$ alkyl.
Preferably, the unit of formula (2) has the following formula (2a),

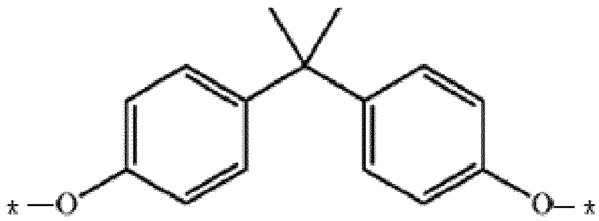

(2a)

wherein * indicates the position where formula (2a) is connected to the polymer chain, i.e., the unit of formula (2) is derived from bisphenol A, i.e. the diphenol of formula (2'a).

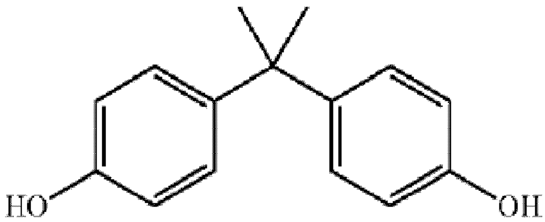

(2'a).

Preferably, the copolycarbonate comprises units derived from bis(4-hydroxyphenyl)-3,3,5-trimethylcyclohexane (BPTMC) and bisphenol A.

Preferably, the copolycarbonate does not comprise units derived from a diphenol other than a diphenol of formula (1') and a diphenol of formula (2').

Preferably, the copolycarbonate does not comprise units derived from a diphenol other than bis(4-hydroxyphenyl)-3,3,5-trimethylcyclohexane (BPTMC) and bisphenol A.

The diphenols of formula (1') and formula (2') are known and can be prepared by processes known from literatures (for example H. J. Buysch et al., Ullmann's Encyclopedia of Industrial Chemistry, VCH, New York 1991, 5th Ed., Vol. 19, p. 348).

The mole content of the units of the formula (1) in the copolycarbonate is 24-70 mol %, more preferably 40 - 70 mol %, based on the total mole number of units of formula (1) and formula (2).

The mole content of the units of the formula (2) in the copolycarbonate is 30 - 76 mol %, more preferably 30 - 60 mol %, based on the total mole number of units of formula (1) and formula (2).

The copolycarbonate used in the composition according to the present invention is commercially available or can be produced by a process known in the art.

For example, the copolycarbonate used in the composition according to the present invention can be produced by an interfacial process. In particular, the diphenols of the formula (1') and (2') and optional branching agents are dissolved in aqueous alkaline solution and reacted with a carbonate source, such as phosgene, optionally dissolved in a solvent, in a two-phase mixture comprising an aqueous alkaline solution, an organic solvent and a catalyst, preferably an amine compound. The reaction procedure can also be conducted in a multistep process.

Such processes for the preparation of copolycarbonate are known in principle as two-phase interfacial processes, for example from H. Schnell, Chemistry and Physics of Polycarbonates, Polymer Reviews, Vol. 9, Interscience Publishers, New York 1964, page 33 et seq., and on Polymer Reviews, Vol. 10, "Condensation Polymers by Interfacial and Solution Methods", Paul W. Morgan, Interscience Publishers, New York 1965, Chapter VIII, page 325, and the underlying conditions are therefore familiar to the person skilled in the art.

The concentration of the diphenols in the aqueous alkaline solution is from 2 wt. % to 25 wt. %, preferably from 2 wt. % to 20 wt. %, more preferably from 2 wt. % to 18 wt. % and even more preferably from 3 wt. % to 15 wt. %. The aqueous alkaline solution consists of water in which hydroxides of alkali metals or alkaline earth metals are dissolved. Sodium and potassium hydroxides are preferred.

The concentration of the amine compound is from 0.1 mol % to 10 mol %, preferably 0.2 mol % to 8 mol %, particularly preferably 0.3 mol % to 6 mol % and more particularly preferably 0.4 mol % to 5 mol %, relative to the mole amount of diphenol used.

The carbonate source is phosgene, diphosgene or triphosgene, preferably phosgene. Where phosgene is used, a solvent may optionally be dispensed with and the phosgene may be passed directly into the reaction mixture.

Tertiary amines, such as triethylamine or N-alkylpiperidines, may be used as a catalyst. Suitable catalysts are trialkylamines and 4-(dimethylamino)pyridine. Triethylamine, tripropylamine, triisopropylamine, tributylamine, trisobutylamine, N-methylpiperidine, N-ethylpiperidine and N-propylpiperidine are particularly suitable.

Halogenated hydrocarbons, such as methylene chloride, chlorobenzene, dichlorobenzene, trichlorobenzene or mixtures thereof, or aromatic hydrocarbons, such as, toluene or xylenes, are suitable as an organic solvent. The reaction temperature may be from -5 °C. to 100 °C, preferably from 0 °C to 80 °C, particularly preferably from 10 °C to 70 °C. and very particularly preferably from 10 °C. to 60 °C. The preparation of the copolycarbonates by the melt transesterification process, in which the diphenols are reacted with diaryl carbonates, generally diphenyl carbonate, in the presence of catalysts, such as alkali metal salts, ammonium or phosphonium compounds, in the melt, is also possible.

The melt transesterification process is described, for example, in Encyclopedia of Polymer Science, Vol. 10 (1969), Chemistry and Physics of Polycarbonates, Polymer Reviews, H. Schnell, Vol. 9, John Wiley and Sons, Inc. (1964), and DE-C 1031 512.

In the transesterification process the aromatic dihydroxy compounds already described in the case of the phase boundary process are transesterified with carbonic acid diesters with the aid of suitable catalysts and optionally further additives in the melt.

The reaction of the aromatic dihydroxy compound and of the carbonic acid diester to give the copolycarbonate can be carried out batchwise or preferably continuously, for example in stirred vessels, thin-film evaporators, falling-film evaporators, stirred vessel cascades, extruders, kneaders, simple disc reactors and high-viscosity disc reactors.

Preferably, the copolycarbonate is selected from block copolycarbonates and random copolycarbonates. More preferably, the copolycarbonate is selected from random copolycarbonates.

Advantageously, the copolycarbonate has a weight average molecular weight (Mw) ranging from 16000 g/mol to 40000 g/mol, preferably from 17000 g/mol to 32000 g/mol, as determined by Gel Permeation Chromatography (GPC) in methylene chloride at 25°C using a polycarbonate standard with an UV-IR detector.

As an example for commercial products of the copolycarbonate suitable for the composition according to the present invention, mention can be made of the products sold under the name APEC® by the company Covestro Polymer (China), which are polycarbonate copolymers made from the copolymerization of carbonyl chloride with bisphenol A (BPA) and 3,3,5-trimethyl-1,1-bis(4-hydroxyphenyl) cyclohexane (BPTMC).

Preferably, the copolycarbonate is present in an amount ranging from 30 wt. % to 80 wt. %, more preferably from 35 wt. % to 75 wt. %, even more preferably from 35 wt. % to 71 wt. %, relative to the total weight of the composition according to the present invention.

**Component B**

According to the first aspect, the polycarbonate composition according to the present invention comprises a homopolycarbonate comprising an unit of formula (2).

In the present application, the homopolycarbonate refers to the polycarbonate comprising an unit of formula (2) as defined above.

The unit of formula (2) is derived from a diphenol of formula (2'):

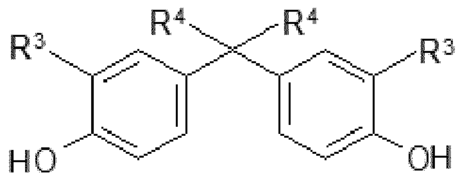

(2')

wherein

$R^3$, each independently, represents H, linear or branched $C_1$-$C_{10}$ alkyl, preferably linear or branched $C_1$-$C_6$-alkyl, more preferably linear or branched $C_1$-$C_4$ alkyl, even more preferably H or methyl, and

$R^4$, each independently, represents linear or branched $C_1$-$C_{10}$ alkyl, preferably linear or branched $C_1$-$C_6$ alkyl, more preferably linear or branched $C_1$-$C_4$-alkyl, even more preferably methyl.

Preferably, the unit of formula (2) is derived from the diphenol of formula (2'a), i.e. bisphenol A.

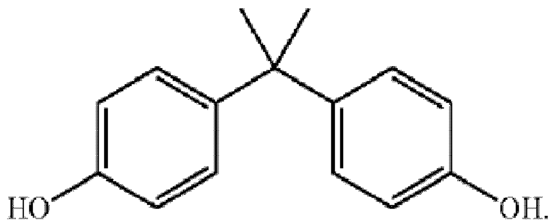

(2'a)

The homopolycarbonate used in the composition according to the present invention is commercially available or can be produced by a process known in the art.

For example, the homopolycarbonate can be produced by referring to the preparation process described with respect to component A.

Preferably, the homopolycarbonate has a weight average molecular weight (Mw) ranging from 24,000 g/mol to 28,000 g/mol, as determined by Gel Permeation Chromatography (GPC) in methylene chloride at 25°C using a polycarbonate standard with an UV-IR detector.

As commercial products of homopolycarbonates suitable for use in the composition according to the present invention, mention can be made of Makrolon® 2400 and Makrolon® 2600 sold by the company Covestro Polymer (China).

Preferably, the homopolycarbonate is present in the polycarbonate composition according to the present invention in an amount ranging from 10 wt. % to 40 wt. %, more preferably 12 wt. % to 35 wt. %, relative to the total weight of the composition.

**Component C**

According to the first aspect, the polycarbonate composition according to the present invention comprises a phosphorous flame retardant.

Preferably, the phosphorus flame retardant suitable for use in the composition according to the present invention are selected from monomeric and oligomeric phosphoric and phosphonic acid esters, phosphazenes, and mixtures thereof.

Preferred monomeric and oligomeric phosphoric and phosphonic acid esters are phosphorus compounds of formula (3).

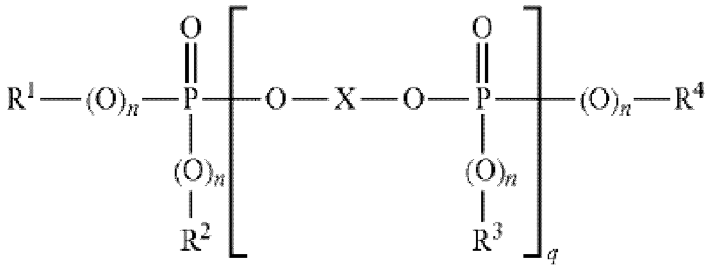

(3)

wherein

$R^1$, $R^2$, $R^3$ and $R^4$, independently of one another, each denotes optionally halogenated C1-C8 alkyl, C5-C6 cycloalkyl, C6-C20 aryl or C7-C12 aralkyl each optionally substituted by alkyl, preferably C1-C4 alkyl, and/or halogen, preferably chlorine, bromine,
n independently of one another, denotes 0 or 1,
q denotes a number ranging from 0 to 30, and
X denotes a mononuclear or polynuclear aromatic residue with 6 to 30 carbon atoms or a linear or branched aliphatic residue with 2 to 30 carbon atoms, which can be OH-substituted and can contain up to eight ether bonds.

Preferably, $R^1$, $R^2$, $R^3$ and $R^4$, independently of one another, each denotes C1-C4 alkyl, phenyl, naphthyl, or phenyl C1-C4 alkyl, wherein the aromatic groups $R^1$, $R^2$, $R^3$ and $R^4$ can themselves be substituted with halogen and/or alkyl groups, preferably chlorine, bromine and/or C1-C4 alkyl. Particularly preferred aryl residues are cresyl, phenyl, xylenyl, propylphenyl or butylphenyl and the corresponding brominated and chlorinated derivatives thereof.
Preferably, X in formula (3) denotes a mononuclear or polynuclear aromatic residue with 6 to 30 carbon atoms.
More preferably, X, is derived from resorcinol, hydroquinone, bisphenol A or diphenylphenol. Particularly preferably, X is derived from bisphenol A.
Preferably, n is equal to 1.
Preferably, q denotes a number from 0 to 20, particularly from 0 to 10, and in the case that a mixture of phosphorus compounds of the general formula (3) are used, a average value from 0.8 to 5.0, preferably 1.0 to 3.0, more preferably 1.05 to 2.00, and particularly preferably from 1.08 to 1.60.
Phosphorus compounds of formula (3) are in particular tributyl phosphate, triphenyl phosphate, tricresyl phosphate, diphenyl cresyl phosphate, diphenyl octyl phosphate, diphenyl-2-ethylcresyl phosphate, tri(isopropylphenyl)phosphate, resorcinol bridged oligophosphate and bisphenol A bridged oligophosphate. The use of oligomeric phosphoric acid esters of formula (3) derived from bisphenol A is particularly preferred.
Most preferred phosphorus compounds of formula (3) is bisphenol A based oligophosphate according to formula (4).

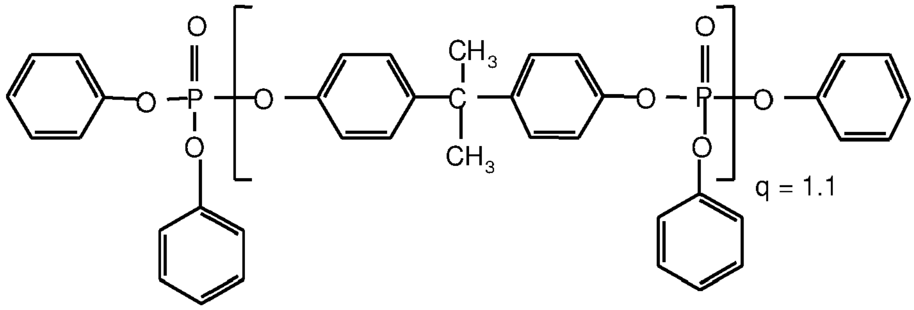

(4)

The phosphorus compounds of formula (3) are known (cf. e.g. EP-A 0 363 608, EP-A 0 640 655) or can be produced by known methods in an analogous manner (e.g. Ullmanns Enzyklopadie der technischen Chemie, vol. 18, pp. 301 ff. 1979; Houben-Weyl, Methoden der organischen Chemie, vol. 12/1, p. 43; Beilstein vol. 6, p. 177).
Preferred phosphazenes are cyclic phosphazenes of formula (5):

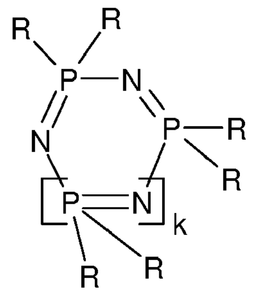

(5)

wherein

k is an integer from 1 to 10, preferably a number from 1 to 8 and particularly preferably 1 to 5,
the trimer content (k = 1) being more than 98 mol%, based on the cyclic phosphazenes, and wherein
R are in each case identical or different and are

- an amine radical,
- $C_1$-$C_8$-alkyl in each case optionally halogenated, preferably with fluorine and more preferably monohalogenated, preferably methyl, ethyl, propyl or butyl,
- $C_1$-$C_8$-alkoxy, preferably methoxy, ethoxy, propoxy or butoxy,
- $C_5$-$C_6$-cycloalkyl in each case optionally substituted by alkyl, preferably $C_1$-$C_4$-alkyl, and/or halogen, preferably chlorine and/or bromine,
- $C_6$-$C_{20}$-aryloxy in each case optionally substituted by alkyl, preferably $C_1$-$C_4$-alkyl, and/or halogen, preferably chlorine or bromine, and/or hydroxyl, preferably phenoxy or naphthyloxy,
- $C_7$-$C_{12}$-aralkyl in each case optionally substituted by alkyl, preferably $C_1$-$C_4$-alkyl, and/or halogen, preferably chlorine and/or bromine, preferably phenyl-$C_1$-$C_4$-alkyl, or
- a halogen radical, preferably chlorine or fluorine, or
- an OH radical.

The phosphazenes and their preparation are described e.g. in EP-A 728 811, DE-A 1961 668 and WO 97/40092.
The following are preferred: propoxyphosphazene, phenoxyphosphazene, methylphenoxyphosphazene, aminophosphazene and fluoroalkylphosphazenes, as well as phosphazenes of the following structures:

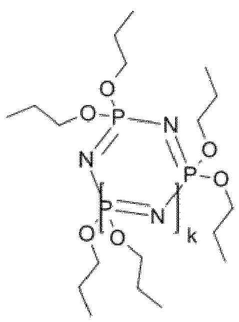

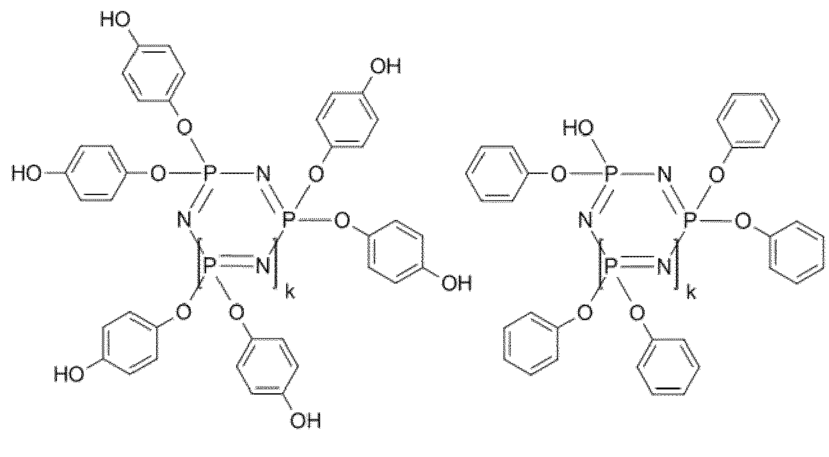

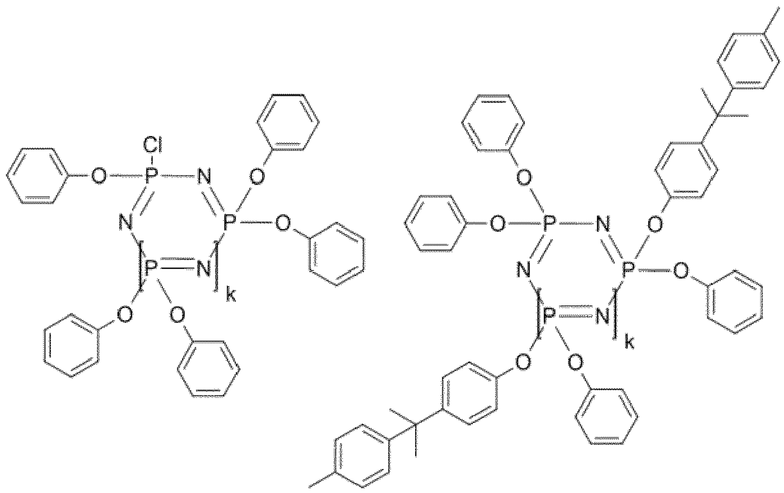

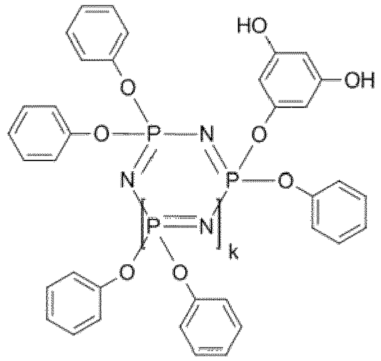

In the compounds shown above, k = 1, 2 or 3.

Preferably, the trimer content (k = 1) is from 98.5 to 100 mol%, preferably from 99 to 100 mol%, based on the cyclic phosphazenes.

In the case where the phosphazene of formula (5) is halogen-substituted on the phosphorus, e.g. from incompletely reacted starting material, the proportion of this phosphazene halogen-substituted on the phosphorus is preferably less than 1000 ppm, more preferably less than 500 ppm.

The phosphazenes can be used on their own or as a mixture, i.e. the radicals R can be identical or 2 or more radicals in formula (5) can be different. Preferably, the radicals R of a phosphazene are identical.

Preferably, only phosphazenes with identical R are used.

Preferably, all R = phenoxy.

The most preferred phosphazene is phenoxyphosphazene of formula (6) (all R = phenoxy) with an oligomer content where k = 1 (C1) of 98.5 - 100 mol%, preferably 99 - 100 mol%.

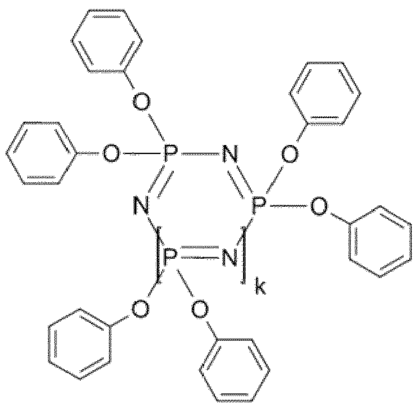

(6)

The oligomer of the phosphazenes in the respective blend samples can also be detected and quantified, after compounding, by $^{31}$P-NMR (chemical shift; $\delta$ trimer: 6.5 to 10.0 ppm; $\delta$ tetramer: -10 to -13.5 ppm; $\delta$ higher oligomers: -16.5 to -25.0 ppm).

As an example of commercial products of phosphazenes, mention can be made of that sold under the trade name HPCTP from Weihai Jinwei Chem Industry Company.

Preferably, the phosphorus flame-retardant is present in the composition according to the present invention in an amount ranging from 8 wt. % to 25 wt. %, more preferably 8 wt. % to 20 wt. %, relative to the total weight of the composition.

## Component D

According to the first aspect, the polycarbonate composition of the present invention may optionally comprise an impact modifier.

There is no particular limitation on the impact modifier. Impact modifiers commonly used in polycarbonate composition can be used in the polycarbonate composition according to the present invention.
Preferably, the impact modifier is selected from rubber-modified vinyl (co)polymers comprising,

D1) 5 to 95 wt. %, preferably 8 to 90 wt. %, in particular 20 to 85 wt. %, of at least one vinyl monomer on
D2) 95 to 5 wt. %, preferably 92 to 10 wt. %, in particular 80 to 15 wt. %, of one or more graft bases having glass transition temperatures of < 10 °C, preferably < 0 °C, particularly preferably < -20 °C,

The wt. % is calculated based on the weight of the rubber-modified vinyl (co)polymer.
The glass transition temperature was determined by means of dynamic differential calorimetry (DSC) in accordance with the standard DIN EN 61006 at a heating rate of 10 K/min with definition of the $T_g$ as the midpoint temperature (tangent method).
The at least one vinyl monomer D1 are preferably mixtures of

D1.1) 50 to 99 wt. %, preferably 65 to 85 wt. %, in particular 75 to 80 wt. %., of vinylaromatics and/or vinylaromatics substituted on the nucleus (such as styrene, α-methylstyrene, p-methylstyrene) and/or methacrylic acid ($C_1$-$C_8$)-alkyl esters (such as methyl methacrylate, ethyl methacrylate) and
D1.2) 1 to 50 wt. %, preferably 15 to 35 wt. %, in particular 20 to 25 wt. %, of vinyl cyanides (unsaturated nitriles, such as acrylonitrile and methacrylonitrile) and/or (meth)acrylic acid ($C_1$-$C_8$)-alkyl esters, such as methyl methacrylate, n-butyl acrylate, *t*-butyl acrylate, and/or derivatives (such as anhydrides and imides) of unsaturated carboxylic acids, for example maleic anhydride and *N*-phenyl-maleimide,

The wt. % is calculated based on the weight of the vinyl monomer D1.
Preferred monomer D1.1 is chosen from styrene, α-methylstyrene and methyl methacrylate. Preferred monomer D1.2 is chosen from acrylonitrile, maleic anhydride and methyl methacrylate. More preferably, monomer D1.1 is styrene and monomer D1.2 is selected from acrylonitrile and methyl methacrylate.
As examples of the graft base D2, mention can be made of, diene rubbers, EP(D)M rubbers (i.e., those based on ethylene/propylene and optionally diene), and acrylate, polyurethane, silicone, and ethylene/vinyl acetate rubbers and silicone/acrylate composite rubbers.
Preferred graft base D2 is chosen from diene rubbers, for example based on butadiene and isoprene, or mixtures of diene rubbers or copolymers of diene rubbers or mixtures thereof with further copolymerizable monomers (e.g. according to D1.1 and D1.2), with the provison that the glass transition temperature of component D2 is below < 10 °C, preferably < 0 °C, particularly preferably < -20 °C.
Particularly preferred graft base D2 is selected from pure polybutadiene rubber or silicone/acrylate composite rubbers, such as silicone-butylacrylate rubber.
Particularly preferred rubber-modified vinyl (co)polymers are for example, ABS, MBS polymers, methyl methacrylate-grated silicon-butylacrylate rubber, as described e.g. in DE-OS 2 035 390 (= US 3 644 574) or in DE-OS 2 248 242 (= GB 1 409 275) and in Ullmanns, Enzyklopädie der Technischen Chemie, vol. 19 (1980), p. 280 et seq.
The rubber-modified vinyl (co)polymers can be prepared by free radical polymerization, e.g. by emulsion, suspension, solution or bulk polymerization, preferably by emulsion or bulk polymerization, in particular by emulsion polymerization.
As examples of commercial products of rubber-modified vinyl (co)polymers can be used in the present invention, mention can be made of:

- ABS 8391 available from SINOPEC Shanghai Gaoqiao Company having a polybutadiene rubber content of 10 - 15 wt. % based on the ABS polymer,
- ABS HRG powder P60 available from the company Styrolution, produced by emulsion polymerisation of 42 - 45 wt. %, based on the ABS polymer, of a mixture of 27 wt. % acrylonitrile and 73 wt. % styrene in the presence of 55-58 wt. %, based on the ABS polymer, of a crosslinked polybutadiene rubber (the average particle diameter dso is 0.3 μm);
- Kane Ace M732 available from Japan Kaneka Chemical Co. Ltd;
- Metablen™ S-2130, S-2100, S-2001, S-2006 and the like available from Mitsubishi Rayon Co., Ltd.

Advantageously, if presents, the impact modifier is present in the polycarbonate composition according to the present invention in amount ranging from 5 wt. % to 10 wt. %, relative to the total weight of the polycarbonate composition.

## Component E

According to the first aspect, the polycarbonate composition of the present invention may optionally comprise

a rubber-free vinyl copolymer.

Preferably, the rubber-free vinyl copolymer is a copolymer made from

E1) from 65 to 85 wt. %, preferably from 70 to 80 wt. %, in particular from 74 to 78 wt. %, based in each case on the rubber-free vinyl copolymer, of at least one monomer selected from vinyl aromatics (for example styrene, α-methylstyrene, p-methylstyrene), and

E2) from 15 to 35 wt. %, preferably from 20 to 30 wt. %, in particular from 22 to 26 wt. %, based in each case on the rubber-free vinyl copolymer, of at least one monomer selected from the group of the vinyl cyanides (for example unsaturated nitriles such as acrylonitrile and methacrylonitrile), ($C_1$-$C_8$)-alkyl (meth)acrylates (for example methyl methacrylate, n-butyl acrylate, tert-butyl acrylate), unsaturated carboxylic acids and derivatives of unsaturated carboxylic acids (for example maleic anhydride and N-phenylmaleinimide).

Particular preference is given to a rubber-free copolymer of styrene (E1) and acrylonitrile (E2).

These copolymers are known and can be produced by free-radical polymerization, in particular by emulsion, suspension, solution or bulk polymerization.

The weight-average molecular weight $M_w$ of the copolymer is preferably from 15 000 to 250 000 g/mol, more preferably from 50 000 to 160 000 g/mol, most preferably from 80 000 to 140 000 g/mol, as determined by gel permeation chromatography(GPC) with polystyrene as standard.

As an example of commercial products of rubber-free vinyl copolymers can be used in the present invention, mention can be made of LUSTRAN® SAN DN50, a styrene-acrylonitrile copolymer of 77 wt. % styrene and 23 wt. % acrylonitrile with a weight average molecular weight Mw of 130000 g/mol.

The inventors have found that with the addition of the rubber-free vinyl copolymer, the flowability of the obtained composition was further improved.

Advantageously, if presents, the rubber-free vinyl copolymer is present in the ploycarbonate composition in amount ranging from 0 wt. % to 8 wt. %, preferably from 3 wt. % to 6 wt. %, relative to the total weight of the polycarbonate composition.

The total amount of the impact modifier (component D) and the rubber-free vinyl copolymer (component E) is no more than 15 wt. %, relative to the total weight of the polycarbonate composition according to the present invention.

## Additives

In addition to components A-E mentioned above, the polycarbonate compositions according to the present invention can optionally comprise one or more additives conventionally used in polycarbonate compositions. Such additives are, for example, fillers, carbon black, UV stabilizers, IR stabilizers, heat stabilizers, antistatic agents, pigments, colorants, lubricants, demoulding agents (such as pentaerythrityl tetrastearate), antioxidants, flow improvers agents, antidripping agents (such as poly(tetrafluoroethylene)) ,etc.

Such additives are described, for example, in WO 99/55772, pages 15-25, and in "Plastics Additives", R. Gachter and H. MUller, Hanser Publishers 1983).

The person skilled in the art can select the type of the additives so as not to adversely affect the desired properties of the polycarbonate composition according to the present invention.

The total amount of the additives preferably is up to 4 wt. %, preferably from 0 to 3 wt. %, more preferably 0 to 2 wt. %, relative to the total weight of the polycarbonate composition according to the present invention.

Preferably, the polycarbonate composition according to the present invention comprises the following components, relative to the total weight of the composition:

A) 35 - 71 wt. % of a copolycarbonate comprising

i) 40 - 70 mol% of an unit of formula (1)

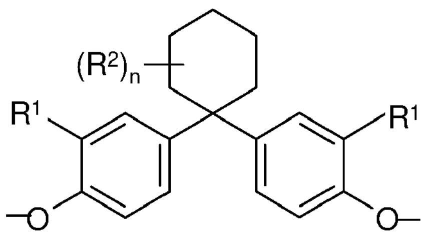

(1)

wherein

$R^1$, each independently, is hydrogen or $C_1$-$C_4$ alkyl,
$R^2$, each independently, is $C_1$-$C_4$ alkyl,
n is 0, 1, 2 or 3, and

ii) 30 - 60 mol% of an unit of formula (2): wherein

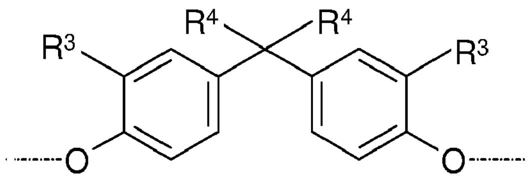

(2)

(2)

$R^3$, each independently, is H, linear or branched $C_1$-$C_{10}$ alkyl, and
$R^4$, each independently, is linear or branched $C_1$-$C_{10}$ alkyl,
wherein the mol% is calculated based on the total mole number of units of formula (1) and formula (2),

B) 10 - 40 wt. % of a homopolycarbonate comprising an unit of formula (2) as defined above, wherein the weight-average molecular weight of the homopolycarbonate is in the range of 24000 - 28000g/mol,
C) 8 - 25 wt. % of a phosphorous flame retardant selected from bisphenol A based oligophosphate according to formula (4).

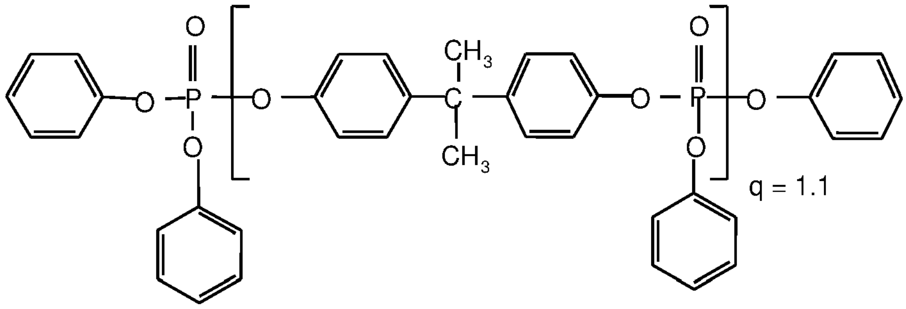

(4) ,

and phenoxyphosphazene of formula (6) (all R = phenoxy) with an oligomer content where k = 1 (C1) of 98.5 -100 mol%, preferably 99-100 mol%,

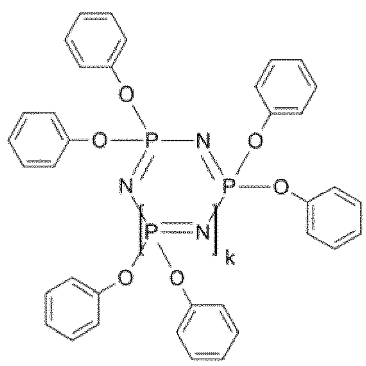

(6),

D) 0 - 10 wt. % of an impact modifier, and
E) 0 - 8 wt. % of a rubber-free vinyl copolymer,

wherein

the total amount of the impact modifier and the rubber-free vinyl copolymer is no more than 15 wt. %, and
the content by weight of the unit of formula (1) in the polycarbonate composition is from 24 wt. % to 50 wt. %.

## Preparation of the polycarbonate composition

The polycarbonate composition according to the present invention can be in the form of, for example, pellets.

The polycarbonate composition according to the present invention demonstrates a good processing behaviour and can be prepared by a variety of methods involving intimate admixing of the materials desired in the composition.

For example, the materials desired in the composition are first blended in a high speed mixer. Low shear processes, including but not limited to hand mixing, can also accomplish this blending. The blend is then fed into the throat of a twin-screw extruder via a hopper. Alternatively, at least one of the components can be incorporated into the composition by feeding it directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. The pellets can be one-fourth inch long or less as described. Such pellets can be used for subsequent molding, shaping or forming.

Melt blending methods are preferred due to the availability of melt blending equipment in commercial polymer processing facilities.

Illustrative examples of equipment used in such melt processing methods include corotating and counter-rotating extruders, single screw extruders, co-kneaders, and various other types of extrusion equipment.

The temperature of the melt in the processing is preferably minimized in order to avoid excessive degradation of the polymers. It is often desirable to maintain the melt temperature between 230 °C and 350 °C in the molten resin composition, although higher temperatures can be used provided that the residence time of the resin in the processing equipment is kept short.

In some cases, the melting composition exits from a processing equipment such as an extruder through small exit holes in a die. The resulting strands of the molten resin are cooled by passing the strands through a water bath. The cooled strands can be chopped into small pellets for packaging and further handling.

## Shaped articles

The polycarbonate compositions according to the present invention can be used, for example for the production of various types of shaped articles.

In the second aspect, the present invention also provides a shaped article made from a polycarbonate composition according to the first aspect of the present invention.

As examples of such shaped articles mention can be made of, for example, films; profiles; housing parts, e.g. for domestic appliances or for office machines such as monitors, flat screens, notebooks, printers and copiers; sheets; tubes; electrical conduits; windows, doors and other profiles for the building sector (interior and exterior applications); electrical and electronic parts such as keypads, screen display covers, switches, plugs and sockets; lenses, and body parts or interior trim for commercial vehicles.

## Preparation of shaped articles

The polycarbonate compositions according to the present invention can be processed into shaped articles by a variety of means such as injection moulding, extrusion moulding, blow moulding or thermoforming to form shaped articles.

In the third aspect, the present invention provides a process for preparing the shaped article made from a composition according to the first aspect of the present invention, comprising injection moulding, extrusion moulding, blow moulding or thermoforming the polycarbonate composition according to the present invention.

## Examples

The present invention will be illustrated in detail below with reference to the examples below. The examples are only for the purpose of illustration, rather than limiting the scope of the present invention.

**Materials used**

Component A

CoPC-1: commercially available from the company Covestro Polymer (China), a copolycarbonate based on 70 mol % of 3,3,5-trimethy1-1,1-bis(4-hydroxyphenyl)cyclohexane (bisphenol TMC) units and 30 mol % of bisphenol A units, based on the total amount of bisphenol units, with a MVR of 7 $cm^3$/10 min, as measured at 330 °C, 1.2 kg according to ISO 1133: (2011), and a weight average molecular weight of about 30000 g/mol, as determined by means of Gel Permeation Chromatography (GPC) in methylene chloride at 25 °C using a polycarbonate standard.
CoPC-2: commercially available from the company Covestro Polymer (China), a copolycarbonate based on 44 mol % of 3,3,5-trimethy1-1,1-bis(4-hydroxyphenyl)cyclohexane (bisphenol TMC) units and 56 mol % of bisphenol A units, based on the total amount of bisphenol units, with a MVR of 16 $cm^3$/10 min, as measured at 330 °C, 1.2 kg according to ISO 1133: 2011, and a weight average molecular weight of about 27000 g/mol, as determined by means of Gel Permeation Chromatography (GPC) in methylene chloride at 25 °C using a polycarbonate standard.

**Component B**

PC-1: commercially available from the company Covestro Polymer (China), a linear polycarbonate based on bisphenol A having a weight average molecular weight (Mw) of 20000 g/mol, as determined by means of Gel Permeation Chromatography (GPC) in methylene chloride at 25 °C using a polycarbonate standard.
PC-2: commercially available from the company Covestro Polymer (China), a linear polycarbonate based on bisphenol A having a weight average molecular weight of 24000 g/mol, as determined by means of Gel Permeation Chromatography (GPC) in methylene chloride at 25 °C using a polycarbonate standard.
PC-3: commercially available from the company Covestro Polymer (China), a linear polycarbonate based on bisphenol A have a weight average molecular weight of 26000 g/mol, as determined by means of Gel Permeation Chromatography (GPC) in methylene chloride at 25 °C using a polycarbonate standard.

**Component C**

BDP: bisphenol-A bis(diphenyl phosphate), available from the company Zhejiang Wansheng Science China.
HPCTP: available from Weihai Jinwei Chem Industry Company, a phenoxyphosphazene of the following formula:

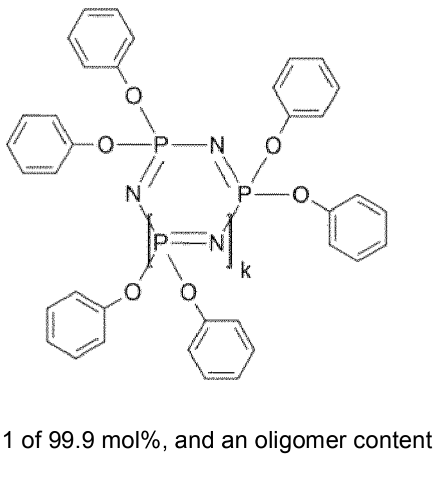

having an oligomer content where k = 1 of 99.9 mol%, and an oligomer content where k ≥ 2 of 0.1mol%.

**Component D**

ABS: available under the trade name P60 from INEOS Styrolution GmbH, a core-shell impact modifier prepared by emulsion polymerization of 58 wt. %, based on the ABS polymer, of a mixture of 24 wt. % of acrylonitrile and 76 wt. % of styrene in the presence of 42 wt. %, based on the ABS polymer, of a linear polybutadiene rubber.
MBS: available under the trade name Kane Ace M732 from Japan Kaneka Chemical Co. Ltd, methyl methacrylate-butadiene-styrene with a core/shell structure.
Si-MBS: methyl methacrylate-grafted silicone-butylacrylate rubber with a core/shell, available under the trade name Metablen™ S-2130 from Mitsubishi Rayon Co., Ltd.

**Component E**

SAN: styrene-acrylonitrile copolymer sold under the trade name LUSTRAN® SAN DN50 from the company INEOS Styrolution GmbH.

**Other additives**

PTFE: masterbatch sold under the trade name ADS5000 from the company Chemical Innovation Co., Ltd. Thailand.
G2: pentaerythritol tetrastearate sold under the trade name G2 from the company Shanghai Coke Import China.
Irganox® B900: a mixture of 80% Irgafos® 168 and 20% Irganox® 1076 sold from the company BASF, wherein Irgafos® 168 is (tris (2,4-di-tert-butylphenyl)phosphite), Irganox® 1076 is (2,6-di-tert-butyl-4-(octadecanoxy-carbonylethyl)-phenol.

**Test methods**

The physical properties of specimens in the examples were tested as follows.

Comparative tracking index

The comparative tracking index (CTI) was determined according to IEC60112:2011.

Melt volume flow rate (MVR)

The melt volume flow rate (MVR) was determined according to ISO 1133: 2011 at 300 °C or 330°C and a loading of 1.2 kg with a Zwick 4106 instrument from Roell.

Flexural modulus

The flexural modulus was determined according to ISO178:2010 at 2mm/min.

Flexural strength

The flexural strength was determined according to ISO178:2010 at 5mm/min.

Izod unnotched impact strength

Izod unnotched impact strength was measured on specimens with dimensions of 80 mm ×10 mm x4 mm according to ISO180/A:2000 (0°C, 4 mm, 5.5J).

Burning behavior

The burning behavior was evaluated on 127 mm x 12.7 mm x 1.5 mm bars according to UL94-2015 after the bars were conditioned at 23°C for 48 hours.

Vicat softening temperature

The Vicat softening temperature (Tvicat) was determined on test specimens of dimension of 80mm×10mm×4mm according to ISO 306: 2013 with a ram load of 50 N and a heating rate of 120 °C/h with a Coesfeld

Eco 2920 instrument from Coesfeld Materialtest.

**Invention Examples (IE) 1-2 and Comparative Examples (CE) 1-11**

The materials listed in Table 1 were compounded on a twin-screw extruder (ZSK-26) (from Coperion, Werner and Pfleiderer) at a speed of rotation of 225 rpm, a throughput of 20 kg/h, and a machine temperature of 300°C-330°C and granulated.

The granules were processed into corresponding testing specimens on an injection moulding machine (from Arburg) with a melting temperature of 300-330 °C and a mold temperature of 60-80 °C.

The physical properties (including comparative tracking index (CTI), melt volume flow rate (MVR), flexural modulus, flexural strength, Izod unnotched impact strength, burning behavior) of the compositions obtained were tested and the results were summarized in Table 1.

Table 1

| Examples | IE1 | IE2 | CE1 | CE2 | CE3 | CE4 | CE5 | CE6 | CE7 | CE8 | CE9 | CE10 | CE11 |
|---|---|---|---|---|---|---|---|---|---|---|---|---|---|
| CoPC-1 | 57.6 | 52 | 87.4 | 78.4 | 75.6 | 64 | - | 87.4 | 80.4 | 71 | 76.2 | 71.2 | 71.2 |
| PC-3 | 12 | 12 | - | - | - | - | 64 | - | - | - | - | - | 8 |
| BDP | 15 | 20 | 8 | 12 | 12 | 20 | 20 | 8 | 10 | - | - | - | - |
| ABS | - | - | 3 | 10 | 6.5 | - | - | - | - | 13 | - | 16 | 8 |
| MBS | 5 | 5 | - | - | - | 5 | 5 | - | - | - | 8 | - | 5 |
| Si-M BS | - | - | - | - | - | - | - | 3 | 8 | - | - | - | - |
| SAN | 8 | 8 | - | - | 4.3 | 8 | 8 | - | - | - | 15 | 12 | - |
| PTFE | 0.8 | 0.8 | 0.8 | 0.8 | 0.8 | 0.8 | 0.8 | 0.8 | 0.8 | - | - | - | 0.8 |
| PETS | 0.4 | 0.4 | 0.4 | 0.4 | 0.4 | 0.4 | 0.4 | 0.4 | 0.4 | - | - | - | 0.4 |
| Irganox B900 | 0.1 | 0.1 | 0.1 | 0.1 | 0.1 | 0.1 | 0.1 | 0.1 | 0.1 | - | - | - | 0.1 |
| BPTMC content (wt. %)[1)] | 40 | 36 | 61 | 54 | 52 | 44 | 0 | 61 | 56 | 49 | 53 | 49 | 49 |
| CTI (V) | 600 | 600 | 600 | 600 | 600 | 600 | 350 | 600 | 600 | 200 | 300 | 175 | 225 |
| MVR tested at 330°C($cm^3$/10min) | 26.2 | 29.0 | 16.2 | 15.5 | 22.8 | 15.0 | 40.0 | 12.9 | 13.4 | 7.6 | 5.29 | 6.78 | 6.86 |
| Flexural modulus (MPa) | 2880 | 2980 | 2720 | 2540 | 2740 | 2850 | 2950 | 2640 | 2440 | 2380 | 2370 | 2170 | 2350 |
| Flexural strength (MPa) | 120 | 120 | 127 | 107 | 117 | 118 | 118 | 119 | 103 | 106 | 109 | 98.9 | 107 |
| Izod unnotched impact strength (kJ/$m^2$) | 83 | 55 | 130 | NB | NB | 50 | 150 | NB[2)] | NB | NB | NB | NB | 14C |
| Burning behavior (Class) | V0 | V0 | V1 | V2 | V2 | V1 | V0 | V1 | V1 | Non_V[3)] | Non-V | Non-V | Non-V |

[1)]: BPTMC content means BPTMC units content in the polycarbonate composition;
[2)]: NB means not break;
[3)]: Non-V means the burning behavior class is worse than V2, according to UL94-2015.

As used herein, the content by weight of BPTMC unit ($C_{BPTM/C/C/W}$) in a polycarbonate composition is calculated as follows:

$$C_{BPTMC/C/W} = \frac{C_{BPTMC/CO/M} \times M_{wBPTMC}}{(C_{BPTMC/CO/M} \times M_{wBPTMC} + C_{BPA/CO/M} \times M_{wBPA})} \times C_{co/c/w}$$

Wherein

$C_{BPTMC/C/W}$ stands for the content by weight of BPTMC unit in the polycarbonate composition;
$C_{BPTMC/CO/M}$ stands for the content by mole of BPTMC unit in a copolycarbonate;
$M_{wBPTMC}$ stands for the molecular weight of BPTMC unit, which is expressed in grams per mole;
$C_{BPA/CO/M}$ stands for the content by mole of BPA unit in the copolycarbonate;
$M_{wBPA}$ stands for the molecular weight of BPA unit, which is expressed in grams per mole; and
$C_{co/c/w}$ stands for the content by weight of the copolycarbonate in a polycarbonate composition.

Taking invention example 1 as an example, the molar content of BPTMC unit is 70 mol% and the molar content of BPA unit is 30 mol% in CoPC-1, the molecular weight of BPTMC unit is 308 g/mol, the molecular weight of BPTMC unit (including -C=O-) is 336 g/mol, the molecular weight of BPA unit (including -C=O-) is 254 g/mol, CoPC-1 is present in an amount of 57.6 wt. % in the polycarbonate composition, thus the content by weight of BPTMC unit in invention example 1 is:

$$\frac{70\ \text{mol\%} \times 308\ \text{g/mol}}{(70\ \text{mol\%} \times 336\ \text{g/mol} + 30\ \text{mol\%} \times 254\ \text{g/mol})} \times 57.6\ \text{wt. \%} = 40\ \text{wt. \%}$$

Each Composition of comparative examples 1, 2, 6 and 7 comprising CoPC-1 blended with a flame-retardant (BDP) and an impact modifier (MBS or Si-MBS) does not have a good flame-retardancy even when the flame-retardant content is up to 12 wt. % in the polycarbonate composition.

Each composition of comparative examples 3 and 4 comprising CoPC-1 blended with a flame-retardant (BDP) and an impact modifier (ABS or MBS) and SAN does not possess a good flame-retardancy.

Composition of comparative example 5 comprising PC-3 blended with a flame-retardant (BDP) and an impact modifier (MBS) and SAN does not possess a high comparative tracking index.

Each composition of comparative examples 8-11 not comprising a flame-retardant does not possess a good flame-retardancy and a high comparative tracking index.

As demonstrated by invention examples 1-2, compositions comprising a copolycarbonate (CoPC-1), a homopolycarbonate (PC-3), and a flame retardant (BDP), and having a BPTMC content no less than 24 wt. % relative to the total weight of the composition, possess not only a high comparative tracking index but also a good flame-retardancy.

**Invention Examples (IE) 3-6 and Comparative Examples (CE) 12-15**

Similarly, the materials listed in Table 2 were compounded, the physical properties of the compositions obtained were tested and the results were summarized in Table 2.

Table 2

| Examples | IE3 | IE4 | CE12 | CE13 | CE14 | CE15 | IE5 | IE6 |
|---|---|---|---|---|---|---|---|---|
| CoPC-1 | 55 | 35 | - | 30 | 20 | 20 | 56.4 | 52 |
| PC-3 | 14 | 34 | 75.8 | 41 | 51 | - | 14 | 12 |
| PC-1 | - | - | - | - | - | 51 | - | - |
| BDP | 18 | 18 | 10.5 | 16 | 16 | 16 | 15 | 20 |
| ABS | 7 | 7 | 7.7 | 7 | 7 | 7 | 5 | 6.5 |

(continued)

| Examples | IE3 | IE4 | CE12 | CE13 | CE14 | CE15 | IE5 | IE6 |
|---|---|---|---|---|---|---|---|---|
| SAN | 4.7 | 4.7 | 4.7 | 4.7 | 4.7 | 4.7 | 8 | 8 |
| PTFE | 0.8 | 0.8 | 0.8 | 0.8 | 0.8 | 0.8 | 0.8 | 0.8 |
| PETS | 0.4 | 0.4 | 0.4 | 0.4 | 0.4 | 0.4 | 0.4 | 0.4 |
| Irganox B900 | 0.1 | 0.1 | 0.1 | 0.1 | 0.1 | 0.1 | 0.1 | 0.1 |
| BPTMC content (wt. %)[1)] | 38 | 24 | 0 | 21 | 14 | 14 | 39 | 36 |
| CTI (V) | 600 | 600 | 300 | 325 | 300 | 275 | 600 | 600 |
| MVR tested at 300°C($cm^3$/10min) | 13.2 | 16.7 | 15.5 | 17.3 | 16.1 | 30.8 | 15 | NA[2)] |
| Flexural modulus ($\times 10^3$ MPa) | 2.81 | 2.75 | 2.48 | 2.74 | 2.64 | 2.71 | 2.88 | 2.98 |
| Flexural strength (MPa) | 109 | 106 | 96.1 | 105 | 102 | 100 | 120 | 118 |
| Izod unnotched impact strength (kJ/$m^2$) | 130 | 170 | NB[3)] | 140 | NB | 230 | 110 | 102 |
| Burning behavior (Class) | V0 | V0 | V0 | V0 | V0 | V0 | V0 | V0 |

[1)]: BPTMC content means BPTMC units content in the polycarbonate composition;
[2)]:NA means not tested;
[3)]: NB means not break.

Composition of comparative example 12 comprising PC-3 blended with a flame-retardant (BDP) and an impact modifier (ABS) and SAN does not possess a high comparative tracking index.

Each Composition of comparative examples 13-15, comprising CoPC-1 blended with a homopolycarbonate (PC-1 or PC-3), a flame-retardant (BDP), and an impact modifier (ABS), and having a BPTMC content lower than 24 wt. % relative to the total weight of the composition, does not have a high comparative tracking index.

As demonstrated by invention examples 3-6, compositions comprising a copolycarbonate (CoPC-1), a homopolycarbonate (PC-3) and a flame retardant (BDP), and having a BPTMC content no less than 24 wt. % relative to the total weight of the composition, possess not only a high comparative tracking index but also a good flame-retardancy.

**Invention Examples (IE) 7-11 and Comparative Examples (CE) 16-19**

Similarly, the materials listed in Table 3 were compounded, the physical properties of the compositions obtained were tested and the results were summarized in Table 3.

Table 3

| Examples | IE7 | IE8 | IE9 | IE10 | IE11 | CE16 | CE17 | CE18 | CE19 |
|---|---|---|---|---|---|---|---|---|---|
| CoPC-1 | 58.8 | - | 55.8 | 71 | 54.5 | - | - | - | - |
| CoPC-2 | - | 60.8 | - | - | - | 73.8 | 67.8 | 60.8 | 76.8 |
| PC-2 | 15 | 15 | 20 | 20.5 | 30 | - | - | - | - |
| HPCTP | 15 | 15 | 15 | - | - | 12 | 15 | 18 | 12 |
| BDP | - | - | - | 8 | 15 | - | - | - | - |
| MBS | 10 | 8 | 8 | - | - | 8 | 8 | 12 | 10 |
| SAN | - | - | - | - | - | 5 | 8 | 8 | - |
| PTFE | 0.8 | 0.8 | 0.8 | 0.8 | 0.8 | 0.8 | 0.8 | 0.8 | 0.8 |
| PETS | 0.3 | 0.3 | 0.3 | 0.3 | 0.3 | 0.3 | 0.3 | 0.3 | 0.3 |
| Irganox B900 | 0.1 | 0.1 | 0.1 | 0.1 | 0.1 | 0.1 | 0.1 | 0.1 | 0.1 |
| BPTMC content (wt. %)[1)] | 41 | 28 | 39 | 49 | 38 | 34 | 32 | 28 | 36 |
| CTI (V) | 600 | 600 | 600 | 600 | 600 | 600 | 600 | 600 | 600 |

(continued)

| Examples | IE7 | IE8 | IE9 | IE10 | IE11 | CE16 | CE17 | CE18 | CE19 |
|---|---|---|---|---|---|---|---|---|---|
| MVR tested at 300°C($cm^3$/10min) | 4.85 | 11.7 | 9.62 | 22.9 | 28 | 7.10 | 10.3 | 9.34 | 4.29 |
| Flexural modulus ($\times 10^3$MPa) | 2.28 | 2.29 | 2.33 | 2.37 | 2.47 | 2.34 | 2.37 | 2.23 | 2.19 |
| Flexural strength(MPa) | 95.1 | 92.9 | 96.5 | 100 | 102 | 95.8 | 95.6 | 85.6 | 92.6 |
| Izod unnotched impact strength ($kJ/m^2$) | NB[2)] | NB | NB | NB | NB | NB | NB | NB | NB |
| Vicat softening temperature(°C) | 133 | 120 | 131 | 145 | 135 | 133 | 121 | 111 | 136 |
| Burning behavior (Class) | V0 | V0 | V0 | V0 | V0 | V1 | V1 | V1 | V1 |
| [1)] : BPTMC content means BPTMC units content in the polycarbonate composition;<br>[2)]: NB means not break. | | | | | | | | | |

Each Composition of comparative examples 16-19, comprising no homopolycarbonate and having a BPTMC content no less than 24 wt. % relative to the total weight of the composition, does not have a good flame-retardancy even though the composition comprises up to 18 wt. % of HPCTP relative to the total weight of the composition.

As demonstrated by invention examples 7-11, compositions comprising a copolycarbonate (CoPC-1 or CoPC-2), a homopolycarbonate (PC-2), and a flame retardant (BDP or HPCTP), and having a BPTMC content no less than 24 wt. % relative to the total weight of the composition, possess not only a high comparative tracking index but also a good flame-retardancy.

## Claims

1. A polycarbonate composition comprising the following components, relative to the total weight of the composition:

   A) 30 - 80 wt. % of a copolycarbonate comprising

   i) 24 - 70 mol% of an unit of formula (1)

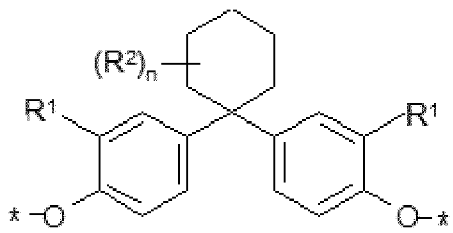

(1)

wherein

* indicates the position where formula (1) is connected to the polymer chain,
$R^1$, each independently, is hydrogen or $C_1$-$C_4$ alkyl,
$R^2$, each independently, is $C_1$-$C_4$ alkyl,
n is 0,1, 2 or 3, and

ii) 30 - 76 mol% of an unit of formula (2):

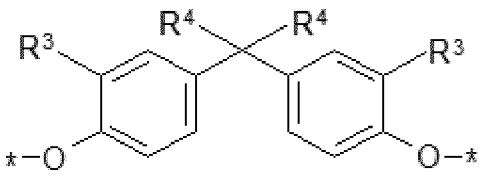

(2)

Wherein

* indicates the position where formula (2) is connected to the polymer chain,
$R^3$, each independently, is H, linear or branched $C_1$-$C_{10}$ alkyl, and
$R^4$, each independently, is linear or branched $C_1$-$C_{10}$ alkyl,
wherein the mol% is calculated based on the total mole number of units of formula (1) and formula (2),

B) 10 - 40 wt. % of a homopolycarbonate comprising an unit of formula (2) as defined above, wherein the weight-average molecular weight of the homopolycarbonate is in the range of 24000 - 28000g/mol,
C) 8 - 25 wt. % of a phosphorous flame retardant,
D) 0 - 10 wt. % of an impact modifier, and
E) 0 - 8 wt. % of a rubber-free vinyl copolymer,

wherein
the total amount of the impact modifier and the rubber-free vinyl copolymer is no more than 15 wt. %, and
the content by weight of the unit of formula (1) in the polycarbonate composition is no less than 24 wt. %.

**2.** Composition according to Claim 1, wherein the copolycarbonate does not comprise units derived from a diphenol other than a diphenol of formula (1') and a diphenol of formula (2'):

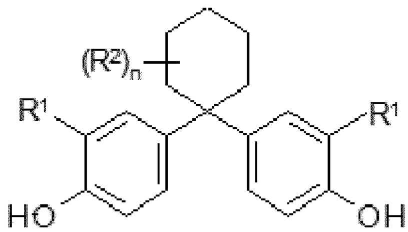

(1')

wherein

$R^1$, each independently, represents hydrogen or $C_1$-$C_4$-alkyl,
$R^2$, each independently, represents $C_1$-$C_4$-alkyl,
n represents 0, 1, 2 or 3;

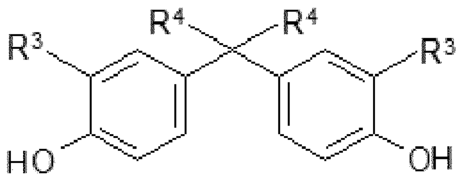

(2')

wherein

$R^3$, each independently, represents H, linear or branched $C_1$-$C_{10}$ alkyl,
$R^4$, each independently, represents linear or branched $C_1$-$C_{10}$ alkyl.

**3.** Composition according to Claim 2, wherein the copolycarbonate does not comprise units derived from a diphenol other than bis(4-hydroxyphenyl)-3,3,5-trimethylcyclohexane (BPTMC) and bisphenol A.

**4.** Composition according to any of Claims 1 to 3, wherein the molar content of the units of the formula (1) in the copolycarbonate is 40 - 70 mol %, based on the total mole number of units of formula (1) and formula (2).

**5.** Composition according to any of Claims 1 to 4, wherein the copolycarbonate is selected from block copolycarbonates and random copolycarbonates.

**6.** Composition according to any of Claims 1 to 5, wherein the copolycarbonate has a weight average molecular weight (Mw) ranging from 16000 g/mol to 40000 g/mol, preferably from 17000 g/mol to 32000 g/mol, as determined by Gel Permeation Chromatography (GPC) in methylene chloride at 25°C using a polycarbonate standard.

**7.** Composition according to any of Claims 1 to 6, wherein the unit of formula (2) in the homopolycarbonate is derived from a diphenol of formula (2'):

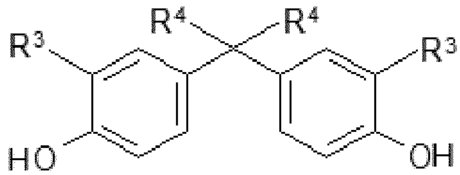

(2')

wherein

$R^3$, each independently, represents H, linear or branched $C_1$-$C_4$ alkyl, and
$R^4$, each independently, represents linear or branched $C_1$-$C_4$-alkyl.

**8.** Composition according to any of Claims 1 to 7, wherein the unit of formula (2) is derived from bisphenol A.

**9.** Composition according to any of claims 1 to 8, wherein the phosphorous flame retardant is selected from phosphorus compounds of formula (3)

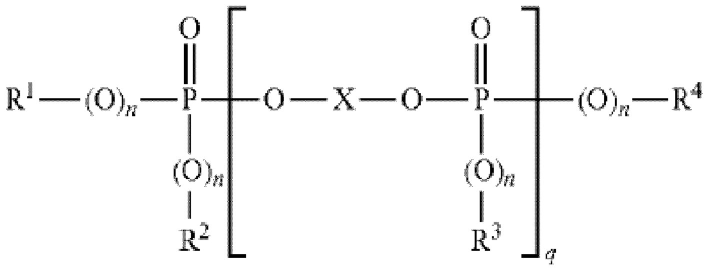

(3)

wherein

$R^1$, $R^2$, $R^3$ and $R^4$, independently of one another, each denotes optionally halogenated C1 to C8 alkyl, C5 to C6 cycloalkyl, C6 to C20 aryl or C7 to C12 aralkyl each optionally substituted by alkyl, preferably C1 to C4 alkyl, and/or halogen, preferably chlorine, bromine,
n independently of one another, denotes 0 or 1,
q denotes a number ranging from 0 to 30 and
X denotes a mononuclear or polynuclear aromatic residue with 6 to 30 carbon atoms or a linear or branched aliphatic residue with 2 to 30 carbon atoms, which can be OH-substituted and can contain up to eight ether bonds, and

cyclic phosphazenes of formula (5):

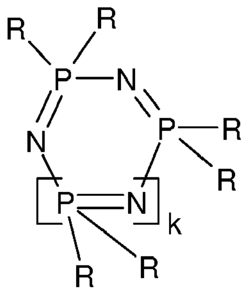

(5)

wherein

k is an integer from 1 to 10, preferably a number from 1 to 8 and particularly preferably 1 to 5, the trimer content (k = 1) being more than 98 mol%, based on the cyclic phosphazenes, and wherein R are in each case identical or different and are

- an amine radical,
- $C_1$-$C_8$-alkyl in each case optionally halogenated, preferably with fluorine and more preferably monohalogenated, preferably methyl, ethyl, propyl or butyl,
- $C_1$-$C_8$-alkoxy, preferably methoxy, ethoxy, propoxy or butoxy,
- $C_5$-$C_6$-cycloalkyl in each case optionally substituted by alkyl, preferably $C_1$-$C_4$-alkyl, and/or halogen, preferably chlorine and/or bromine,
- $C_6$-$C_{20}$-aryloxy in each case optionally substituted by alkyl, preferably $C_1$-$C_4$-alkyl, and/or halogen, preferably chlorine or bromine, and/or hydroxyl, preferably phenoxy or naphthyloxy,
- $C_7$-$C_{12}$-aralkyl in each case optionally substituted by alkyl, preferably $C_1$-$C_4$-alkyl, and/or halogen, preferably chlorine and/or bromine, preferably phenyl-$C_1$-$C_4$-alkyl, or
- a halogen radical, preferably chlorine or fluorine, or
- an OH radical,

preferably, the phosphorous flame retardant is selected from bisphenol A based oligophosphate according to formula (4):

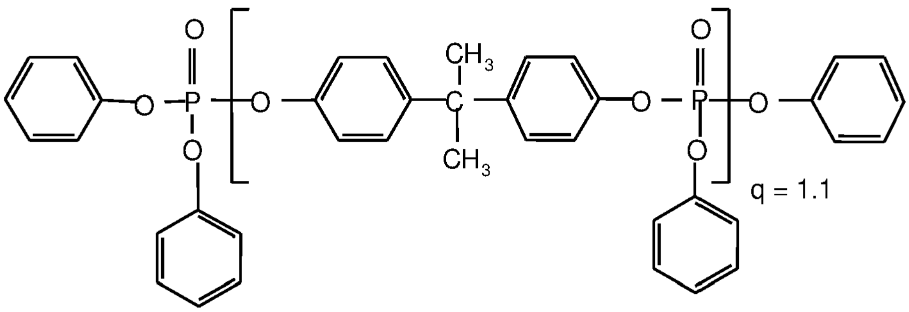

(4),

and and a phenoxyphosphazene of formula (6) with an oligomer content where k = 1 of 98.5 -100 mol%, preferably 99-100 mol%:

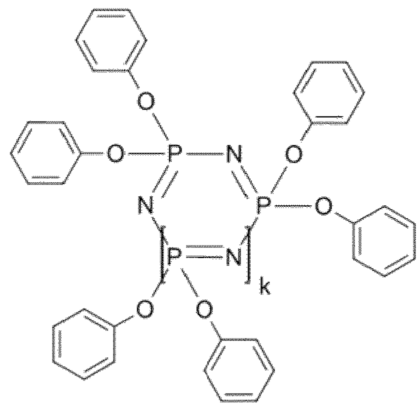

(6).

**10.** Composition according to any of Claims 1 to 9, further comprising an impact modifier selected from rubber-modified vinyl (co)polymer comprising

D1) 5 to 95 wt. %, preferably 8 to 90 wt. %, in particular 20 to 85 wt. %, of at least one vinyl monomer on
D2) 95 to 5 wt. %, preferably 92 to 10 wt. %, in particular 80 to 15 wt. %, of one or more graft bases having glass transition temperatures of < 10 °C, preferably < 0 °C, particularly preferably < -20 °C,

the wt. % is calculated based on the weight of the rubber-modified vinyl (co)polymer.

**11.** Composition according to Claim 10, wherein
the at least one vinyl monomer D1 is a mixture of

D1.1) 50 to 99 wt. %, preferably 65 to 85 wt. %, in particular 75 to 80 wt. %., of vinylaromatics and/or vinylaromatics substituted on the nucleus (such as styrene, α-methylstyrene, p-methylstyrene) and/or methacrylic acid ($C_1$-$C_8$)-alkyl esters (such as methyl methacrylate, ethyl methacrylate) and
D1.2) 1 to 50 wt. %, preferably 15 to 35 wt. %, in particular 20 to 25 wt. %, of vinyl cyanides (unsaturated nitriles, such as acrylonitrile and methacrylonitrile) and/or (meth)acrylic acid ($C_1$-$C_8$)-alkyl esters, such as methyl methacrylate, n-butyl acrylate, *t*-butyl acrylate, and/or derivatives (such as anhydrides and imides) of unsaturated carboxylic acids, for example maleic anhydride and N-phenyl-maleimide,

the wt. % is calculated based on the weight of the vinyl monomer D1;
and/or
the graft base D2 is chosen from diene rubbers, EP(D)M, and acrylate, polyurethane, silicone, and ethylene/vinyl acetate rubbers and silicone/acrylate composite rubbers.

**12.** Composition according to claim 11, wherein monomer D1.1 is styrene, monomer D1.2 is selected from acrylonitrile and methyl methacrylate, graft base D2 is selected from pure polybutadiene rubber or silicone/acrylate composite rubbers, such as silicon(e)-butylacrylate rubber.

**13.** Composition according to any of Claims 1 to 12, further comprising a rubber-free vinyl copolymer selected from a copolymer made from

E1) from 65 to 85 wt. %, preferably from 70 to 80 wt. %, in particular from 74 to 78 wt. %, based in each case on the rubber-free vinyl copolymer, of at least one monomer selected from styrene, α-methylstyrene, and p-methylstyrene, and
E2) from 15 to 35 wt. %, preferably from 20 to 30 wt. %, in particular from 22 to 26 wt. %, based in each case on the rubber-free vinyl copolymer, of at least one monomer selected from acrylonitrile, methacrylonitrile, ($C_1$-$C_8$)-alkyl (meth)acrylates maleic anhydride, and N-phenylmaleinimide.

**14.** A shaped article made from the composition according to any of Claims 1 to 13.

**15.** A process for preparing the shaped article according to Claim 14, comprising injection moulding, extrusion moulding, blow moulding or thermoforming the polycarbonate composition according to any of Claims 1 to 13.

Europäisches Patentamt
European Patent Office
Office européen des brevets

# EUROPEAN SEARCH REPORT

Application Number
EP 21 17 4269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/044365 A1 (VAN DE WETERING KARIN IRENE [NL] ET AL) 16 February 2017 (2017-02-16) * paragraphs [0002], [0004], [0005]; example comp.ex.20 * ----- | 1-15 | INV. C08L69/00 |
| A | EP 2 032 651 A2 (SABIC INNOVATIVE PLASTICS IP [NL]) 11 March 2009 (2009-03-11) * paragraph [0004]; example 2; table 2 * ----- | 1-15 | |

TECHNICAL FIELDS SEARCHED (IPC)

C09J
C08L

The present search report has been drawn up for all claims

1

| Place of search | Date of completion of the search | Examiner |
|---|---|---|
| The Hague | 26 October 2021 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 21 17 4269

This annex lists the patent family members relating to the patent documents cited in the above-mentioned European search report. The members are as contained in the European Patent Office EDP file on
The European Patent Office is in no way liable for these particulars which are merely given for the purpose of information.

26-10-2021

| Patent document cited in search report | Publication date | Patent family member(s) | Publication date |
|---|---|---|---|
| US 2017044365 A1 | 16-02-2017 | CN 106661316 A | 10-05-2017 |
| | | EP 3137550 A1 | 08-03-2017 |
| | | US 2017044365 A1 | 16-02-2017 |
| | | WO 2015166381 A1 | 05-11-2015 |
| EP 2032651 A2 | 11-03-2009 | CN 101479340 A | 08-07-2009 |
| | | EP 2032651 A2 | 11-03-2009 |
| | | US 2008004404 A1 | 03-01-2008 |
| | | WO 2008002734 A2 | 03-01-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4900784 A
- DE 1031512 C
- EP 0363608 A
- EP 0640655 A
- EP 728811 A
- DE 1961668 A
- WO 9740092 A
- DE OS2035390
- US 3644574 A
- DE OS2248242
- GB 1409275 A
- WO 9955772 A


### Non-patent literature cited in the description


- **S. SULLALTI et al.** Effect of phosphorus based flame retardants on UL94 and Comparative Tracking Index properties of poly(butylene terephthalate). *Polymer Degradation and Stability,* 2012
- **H. J. BUYSCH et al.** Ullmann's Encyclopedia of Industrial Chemistry. VCH, 1991, vol. 19, 348
- **H. SCHNELL.** Chemistry and Physics of Polycarbonates, Polymer Reviews. Interscience Publishers, 1964, vol. 9, 33
- Condensation Polymers by Interfacial and Solution Methods. **PAUL W. MORGAN.** Polymer Reviews. Interscience Publishers, 1965, vol. 10, 325
- Encyclopedia of Polymer Science. 1969, vol. 10
- **H. SCHNELL.** Chemistry and Physics of Polycarbonates, Polymer Reviews. John Wiley and Sons, Inc, 1964, vol. 9
- Ullmanns Enzyklopadie der technischen Chemie. 1979, vol. 18, 301 ff
- *Houben-Weyl, Methoden der organischen Chemie,* vol. 12/1, 43
- *Beilstein,* vol. 6, 177
- Ullmanns, Enzyklopädie der Technischen Chemie. 1980, vol. 19, 280
- **R. GACHTER ; H. MULLER.** Plastics Additives. Hanser Publishers, 1983